# EUROPEAN PATENT SPECIFICATION

(11) **EP 3 798 034 B1**
(45) Date of publication and mention of the grant of the patent: **01.06.2022**
(21) Application number: 20198478.8
(22) Date of filing: 25.09.2020
(51) Int. Cl.: B60K 1/04

(54) **ELECTRICAL COMPONENT SUPPORT STRUCTURE**
TRÄGERSTRUKTUR FÜR EINE ELEKTRISCHE KOMPONENTE
STRUCTURE DE SUPPORT DE COMPOSANT ÉLECTRIQUE

(30) Priority: 30.09.2019 JP 2019178368
(43) Date of publication of application: 31.03.2021
(73) Proprietor: Suzuki Motor Corporation, Shizuoka 432-8611 (JP)
(72) Inventor: NAKANO, Yusuke, Shizuoka 432-8611 (JP)
(74) Representative: Haseltine Lake Kempner LLP

(56) References cited:
- CN-A- 107 640 227
- JP-A- 2018 039 483
- JP-A- 2018 098 060
- JP-B2- 5 061 941

## Description

### Technical Field

The present invention relates to an electrical component support structure.

### Background Art

In a vehicle such as an automobile, an electrical component such as a battery may be disposed between a floor panel and a surface of a seat. In such a vehicle, the electrical component is placed on a floor panel below a front seat and is between a tunnel portion provided at a central portion in the vehicle width direction and a side sill provided at an outer end portion in the vehicle width direction.

An electric vehicle described in Patent Literature 1 is known as such a vehicle in the related art. The electric vehicle described in Patent Literature 1 includes a pair of left and right lower rails that are in parallel to each other in the vehicle front-rear direction in positions separated from an upper surface of a front floor panel toward an upper side in the vehicle upper-lower direction, and a pair of left and right upper rails that are in parallel to each other in the vehicle front-rear direction on a lower surface of a front seat and are slidably supported by the pair of left and right lower rails. A battery for traveling is installed between the pair of left and right lower rails.

Since the battery for traveling is installed between the pair of left and right lower rails in parallel to each other in the vehicle front-rear direction in positions separated from the upper surface of the front floor panel toward the upper side in the vehicle upper-lower direction, the electric vehicle described in Patent Literature 1 can prevent the battery for traveling from being impaired with the battery for traveling moving toward an inner side of a vehicle interior when the vehicle collides from a side.
Document JP 2018 098060 discloses a battery pack capable of improving radiation performance to a vehicle side member to which a base of a housing is fixed from an electric component.

### Citation List

### Patent Literature

Patent Literature 1: JP-A-2018-039483

### Technical Problem

Herein, such a power supply device is connected to a power supply harness. Accordingly, in addition to preventing a structure of the battery from being damaged, it is desirable to prevent the harness from being impaired due to displacement of the battery, to avoid electric leakage due to the impairment of the harness, and to continue power supply from the battery.

However, the technique in the related art described in Patent Literature 1 did not consider protecting the harness extending from the battery at the time of side collision and the harness cannot be protected.

The present invention is made in view of the above circumstance and an object thereof is to provide an electrical component support structure capable of protecting an electrical component and a harness extending from the electrical component at the time of side collision of a vehicle.

### Solution to Problem

According to the present invention, there is provided an electrical component support structure including:
a side sill extending in a vehicle front-rear direction at an outer end portion of a floor panel in a vehicle width direction;
a tunnel portion extending in the vehicle front-rear direction at a central portion of the floor panel in the vehicle width direction;
an electrical component including a connector portion to which a harness is connected; and
a bracket disposed between the side sill and the tunnel portion on an upper surface of the floor panel and supporting the electrical component,
wherein the bracket includes
   an installation portion to which the electrical component is installed, and
   a pair of leg portions supporting the installation portion to be separated from the floor panel toward an upper side, extending in parallel to each other from end portions of the installation portion on a side of the tunnel portion toward the tunnel portion, and each of the pair of leg portions including a fastening portion fastened to the floor panel,
wherein the connector portion is disposed between the pair of leg portions and between the tunnel portion and the electrical component in a plan view of a vehicle,
wherein a hole penetrating the floor panel is provided in a position between the fastening portions of the pair of leg portions, and
wherein the harness connected to the connector portion passes through the hole.

### Advantageous Effects of Invention

According to the present invention as described above, it is possible to protect the electrical component and the harness extending from the electrical component at the time of side collision of the vehicle.

### Brief Description of Drawings

Fig. 1 is a plan view of an electrical component support structure according to an embodiment of the present invention.
Fig. 2 is a sectional view of the electrical component support structure in Fig. 1 taken along a line II-II.
Fig. 3 is a sectional view of the electrical component support structure in Fig. 1 taken along a line III-III.
Fig. 4 is a plan view of a bracket of the electrical component support structure according to the embodiment of the present invention.
Fig. 5 is a front view of the bracket of the electrical component support structure according to the embodiment of the present invention.
Fig. 6 is a back view of the bracket of the electrical component support structure according to the embodiment of the present invention.
Fig. 7 is a left view of the bracket of the electrical component support structure according to the embodiment of the present invention.
Fig. 8 is a sectional view of the bracket in Fig. 4 taken along a line IIX-IIX.
Fig. 9 is a sectional view of the bracket in Fig. 4 taken along a line IX-IX.
Fig. 10 is a plan view showing a state of the electrical component support structure according to the embodiment of the present invention after vehicle collision.
Fig. 11 is a front view showing the state of the electrical component support structure according to the embodiment of the present invention after the vehicle collision.

### Description of Embodiments

According to an embodiment of the present invention, there is provided an electrical component support structure including: a side sill extending in a vehicle front-rear direction at an outer end portion of a floor panel in a vehicle width direction; a tunnel portion extending in the vehicle front-rear direction at a central portion of the floor panel in the vehicle width direction; an electrical component including a connector portion to which a harness is connected; and a bracket disposed between the side sill and the tunnel portion on an upper surface of the floor panel and supporting the electrical component. The bracket includes an installation portion to which the electrical component is installed, and a pair of leg portions supporting the installation portion to be separated from the floor panel toward an upper side, extending in parallel to each other from end portions of the installation portion on a side of the tunnel portion toward the tunnel portion, and each of the pair of leg portions including a fastening portion fastened to the floor panel at a distal end portion. The connector portion is disposed between the pair of leg portions and between the tunnel portion and the electrical component in a plan view of a vehicle. A hole penetrating the floor panel is provided in a position between the fastening portions of the pair of leg portions. The harness connected to the connector portion passes through the hole. Accordingly, the electrical component support structure according to the embodiment of the present invention can protect the electrical component and the harness extending from the electrical component at the time of side collision of the vehicle.

### Embodiment

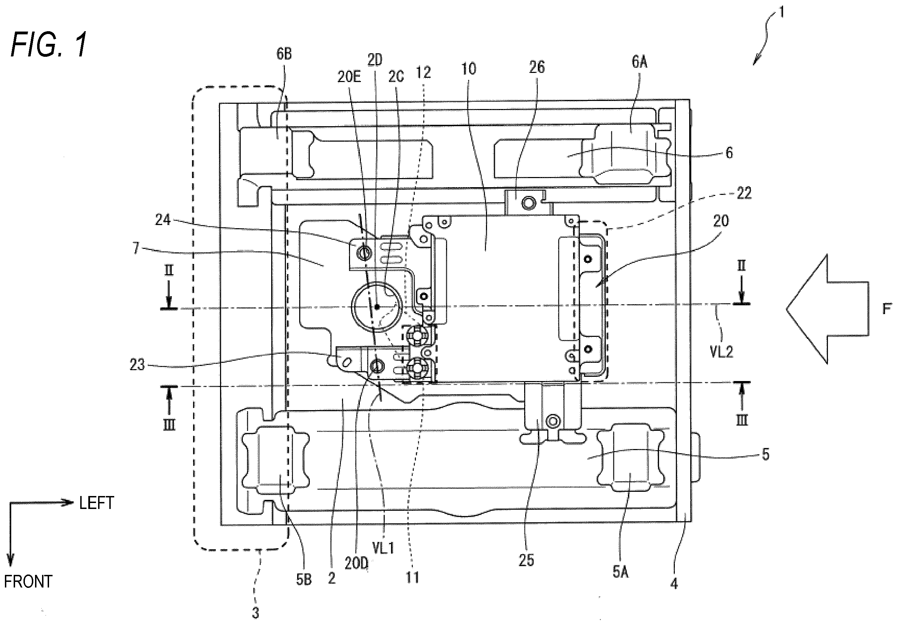

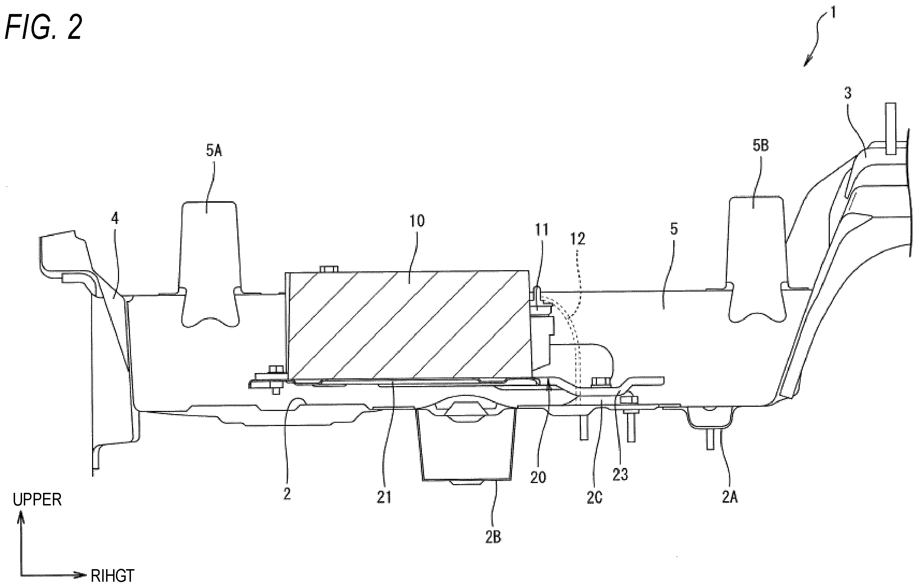

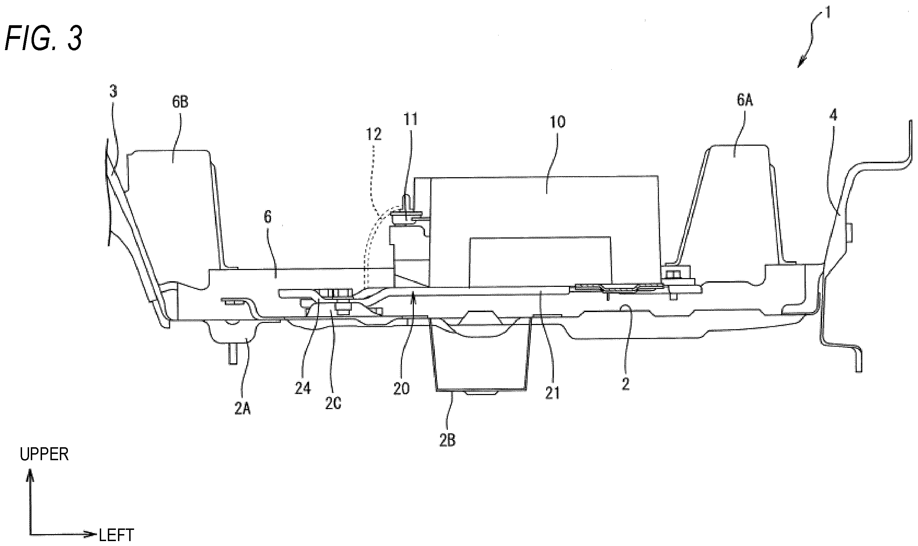

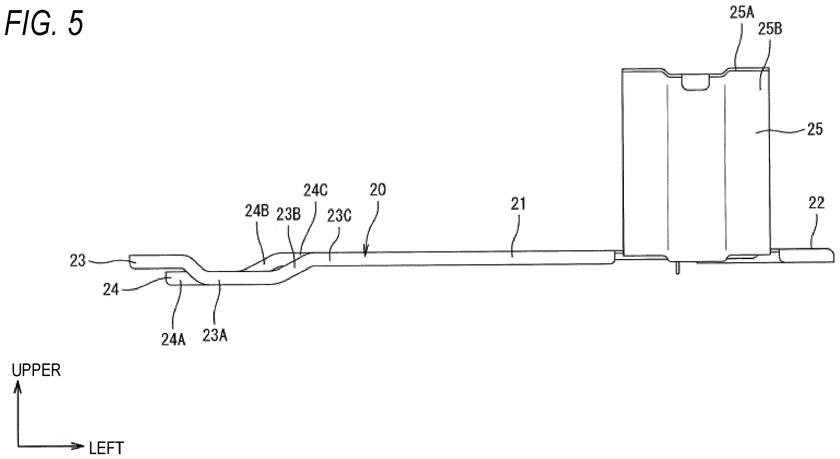

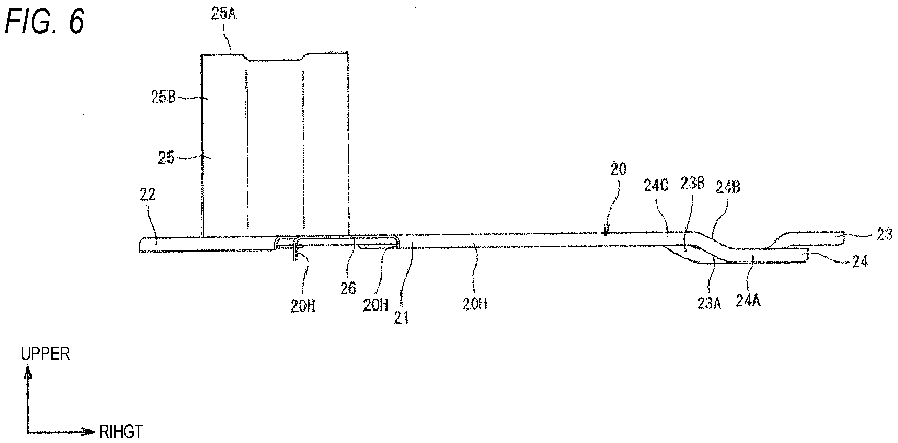

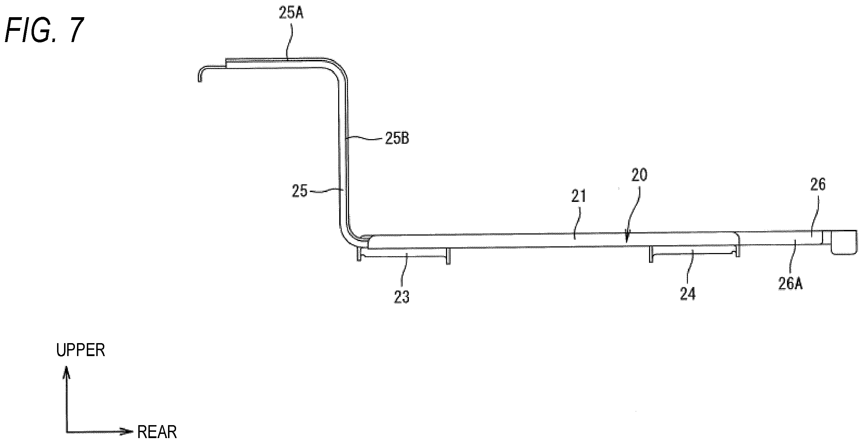

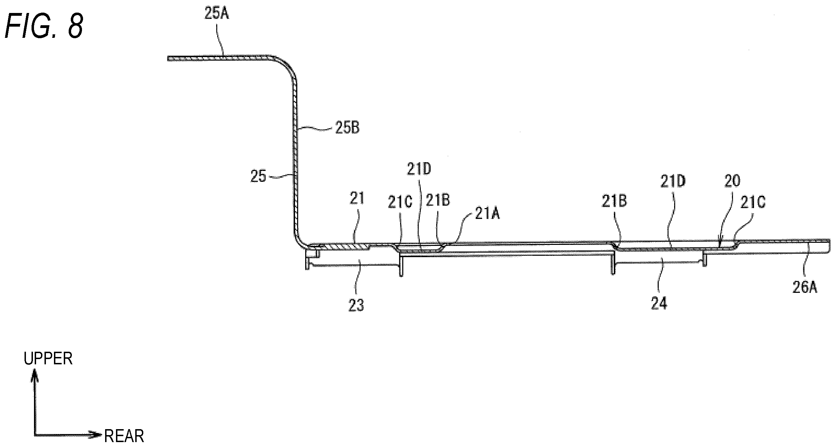

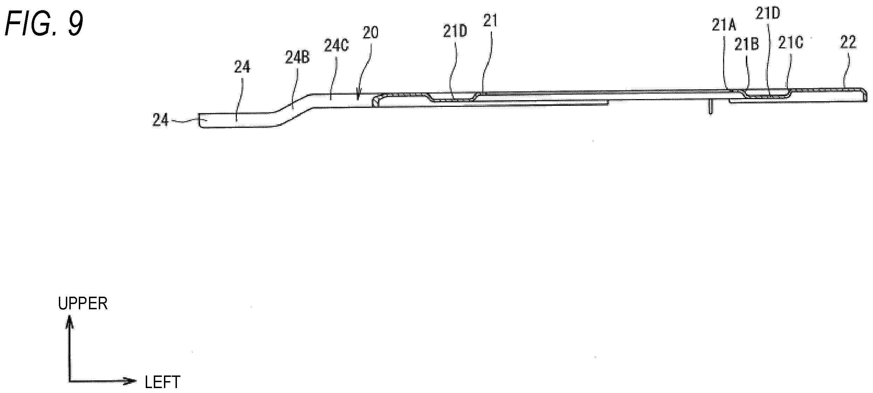

An electrical component support structure according to an embodiment of the present invention will be described below with reference to the drawings. In Figs. 1 to 11, upper, lower, front, rear, left, and right directions are corresponding directions in a vehicle mounted state. Figs. 1 to 11 show the electrical component support structure according to the embodiment of the present invention.

In Figs. 1, 2, and 3, a vehicle 1 includes a floor panel 2 constituting a floor surface of a vehicle body. The floor panel 2 is provided over the entire vehicle 1 from one end portion to the other end portion in the vehicle width direction. Fig. 1 shows the left half floor panel 2 of the vehicle 1. The floor panel 2 is provided with a side sill 4 at an outer end portion in the vehicle width direction. The side sill 4 extends in the vehicle front-rear direction. The floor panel 2 is provided with a tunnel portion 3 at a central portion in the vehicle width direction. The tunnel portion 3 extends in the vehicle front-rear direction.

The vehicle 1 includes an electrical component 10 and a bracket 20. The electrical component 10 includes a connector portion 11 to which a harness 12 is connected. In the present embodiment, the electrical component 10 is constituted by a battery, which supplies power to other electrical components via the harness 12. The bracket 20 is installed between the side sill 4 and the tunnel portion 3 on an upper surface of the floor panel 2, and supports the electrical component 10.

The vehicle 1 further includes a first cross member 5 and a second cross member 6 on the upper surface of the floor panel 2. The first cross member 5 is located on a vehicle front side relative to the electrical component 10. The second cross member 6 is located on a vehicle rear side relative to the electrical component 10.

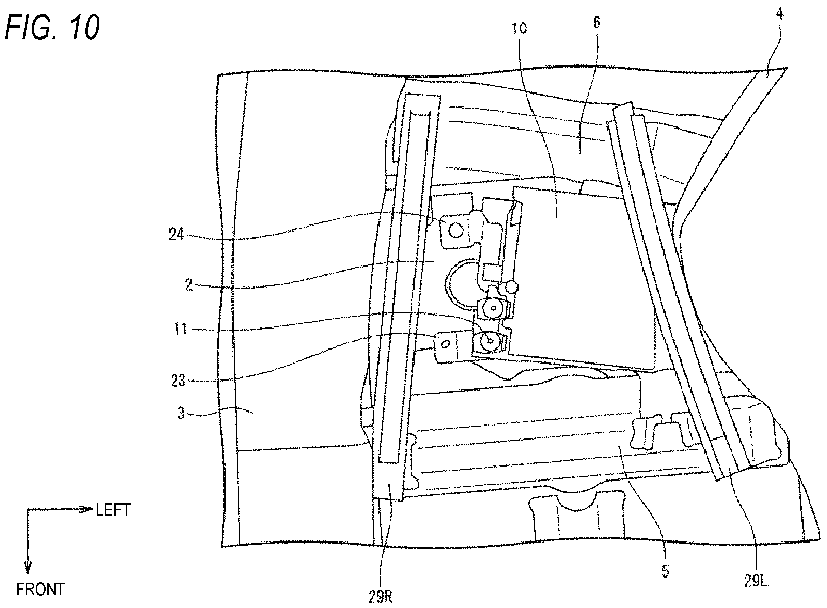

The first cross member 5 and the second cross member 6 include pedestal portions 5A, 6A on upper portions of left end portions, respectively. The pedestal portions 5A, 6A support a slide rail 29L (see Fig. 10) fixed to a lower surface of a seat (not shown). The first cross member 5 and the second cross member 6 include pedestal portions 5B, 6B on upper portions of right end portions, respectively. The pedestal portions 5B, 6B support a slide rail 29R (see Fig. 10) fixed to the lower surface of the seat (not shown).

The electrical component 10 is disposed between the first cross member 5 and the second cross member 6 serving as a pair of cross members extending in the vehicle width direction in parallel to each other.

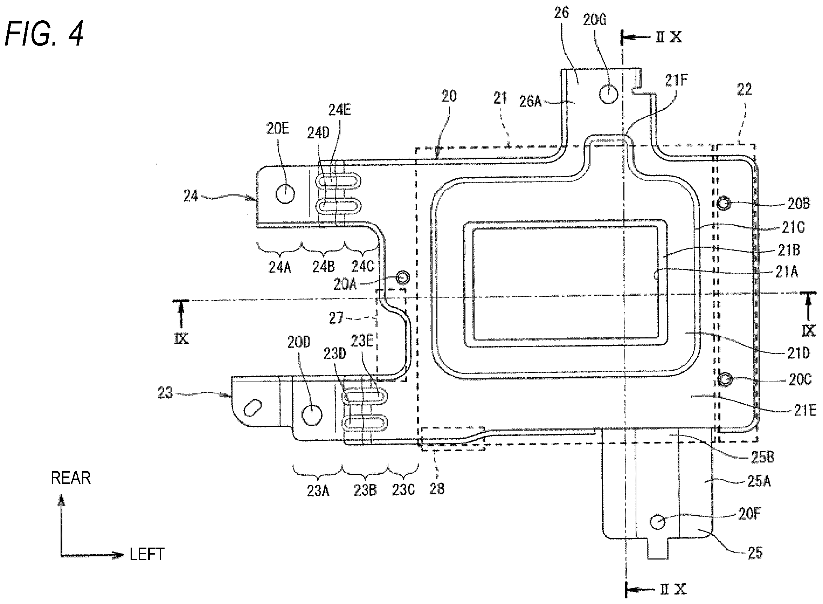

The bracket 20 includes an installation portion 21 (see Fig. 4) to which the electrical component 10 is installed, and a first leg portion 23 and a second leg portion 24 serving as a pair of leg portions. The first leg portion 23 and the second leg portion 24 extend in parallel to each other from end portions on a tunnel portion 3 side of the installation portion 21 toward the tunnel portion 3, and support the installation portion 21 to be separated from the floor panel 2 toward an upper side.

A circular hole 2C penetrating the floor panel 2 is provided between the first leg portion 23 and the second leg portion 24. The harness 12 connected to the connector portion 11 passes through the hole 2C. The hole 2C has a smooth edge. The hole 2C is formed in a position between a first fastening portion 23A and a second fastening portion 24A of the first leg portion 23 and the second leg portion 24. In a plan view of the vehicle 1, a center 2D of the hole 2C is closer to the installation portion 21 than a first virtual line VL1 passing through the first fastening portion 23A and the second fastening portion 24A of the first leg portion 23 and the second leg portion 24.

A plurality of member portions including a first member portion 2A and a second member portion 2B extending in the vehicle front-rear direction below the floor panel 2 are provided between the side sill 4 and the tunnel portion 3. The first leg portion 23 and the second leg portion 24 serving as a pair of leg portions and the hole 2C are disposed between the first member portion 2A and the second member portion 2B in the vehicle width direction.

The first member portion 2A is adjacent to the tunnel portion 3. The second member portion 2B is disposed in a position where the second member portion 2B overlaps the electrical component 10 in the upper-lower direction. The second member portion 2B is biased toward the hole 2C relative to a central portion of the electrical component 10 in the vehicle width direction.

A reinforcing plate 7 fastened to the first member portion 2A and the second member portion 2B is provided on the upper surface of the floor panel 2. The first leg portion 23 and the second leg portion 24 serving as a pair of leg portions are fastened to the reinforcing plate 7. The hole 2C penetrates not only the floor panel 2 but also the reinforcing plate 7.

In Figs. 4, 5, 6, and 7, the bracket 20 has attachment holes 20A, 20B, and 20C for attaching the electrical component 10.

The connector portion 11 is disposed between the first leg portion 23 and the second leg portion 24 serving as a pair of leg portions and between the tunnel portion 3 and the electrical component 10 in the plan view of the vehicle 1.

The first leg portion 23 is disposed on the vehicle front side relative to the second leg portion 24. The first leg portion 23 includes the first fastening portion 23A, a first inclined portion 23B, and a first coupling portion 23C. The second leg portion 24 includes the second fastening portion 24A, a second inclined portion 24B, and a second coupling portion 24C.

The first fastening portion 23A and the second fastening portion 24A are disposed at distal end portions of the first leg portion 23 and the second leg portion 24. The first fastening portion 23A and the second fastening portion 24A are fixed (fastened) to the floor panel 2 by fastening bolts (not shown) to fastening holes 20D, 20E.

The first inclined portion 23B and the second inclined portion 24B are disposed on the side sill 4 side relative to the first fastening portion 23A and the second fastening portion 24A, and are inclined obliquely downward from the side sill 4 toward the tunnel portion 3.

The first coupling portion 23C and the second coupling portion 24C couple the installation portion 21 to the first inclined portion 23B and the second inclined portion 24B.

The installation portion 21 includes an extension portion 22 at an end portion on a side sill 4 side. The extension portion 22 extends toward the side sill 4. The connector portion 11 is disposed in a position where the connector portion 11 overlaps the first coupling portion 23C in the upper-lower direction.

The installation portion 21 has an opening 21A at a center. Part of heat generated in the electrical component 10 is dissipated through the opening 21A.

Each of an edge of the installation portion 21 and an edge of a second fixing portion 26 has a flange portions 20H curved toward a lower side. The flange portion 20H contributes to improvement in rigidity.

The installation portion 21 includes an upper surface portion 21E in contact with a bottom surface of the electrical component 10, and a recess 21D that is recessed downward relative to the upper surface portion 21E.

Between the upper surface portion 21E and the recess 21D of the installation portion 21 are provided with a stepped first reinforcing portion 21B and a stepped second reinforcing portion 21C. The rigidity of the installation portion 21 is enhanced by the first reinforcing portion 21B and the second reinforcing portion 21C.

The installation portion 21 includes a cutout portion 27 that is recessed toward the side sill 4 from the end portion on the tunnel portion 3 side. The cutout portion 27 is formed at an end portion on the tunnel portion 3 side between the first leg portion 23 and the second leg portion 24, and is disposed in a position where the cutout portion 27 faces the first coupling portion 23C of the first leg portion 23 in the vehicle front-rear direction.

Specifically, the cutout portion 27 is an end portion on the tunnel portion 3 side of the installation portion 21 between the first leg portion 23 and the second leg portion 24, and is disposed in a position where the cutout portion 27 faces a base portion of the first leg portion 23 in the vehicle front-rear direction.

When a second virtual line VL 2 passing through the center 2D of the hole 2C in the vehicle width direction is set in the plan view of the vehicle 1, the cutout portion 27 is formed over the base portion of the first leg portion 23 from the second virtual line VL 2 on an outer edge of the installation portion 21, and is disposed in a position where the connector portion 11 overlaps the cutout portion 27 in the upper-lower direction in the plan view of the vehicle 1.

By forming the cutout portion 27, the total length of the first leg portion 23 is larger than the total length of the second leg portion 24.

Since the cutout portion 27 is provided, the first coupling portion 23C is disposed on an outer side in the vehicle width direction relative to the second coupling portion 24C.

The installation portion 21 includes an expansion portion 28 at an end portion on the vehicle front side of the first leg portion 23 side. The expansion portion 28 expands toward the vehicle front side. A front end surface of the expansion portion 28 and a front end surface of the first leg portion 23 are continuous on the same plane. An outer end portion of the expansion portion 28 in the vehicle width direction is disposed on the outer side in the vehicle width direction relative to an outer edge portion of the cutout portion 27 in the vehicle width direction.

The bracket 20 includes a first fixing portion 25 that extends from the installation portion 21 to the vehicle front side and is fixed to the first cross member 5, and a second fixing portion 26 that extends from the installation portion 21 to the vehicle rear side and is connected to the second cross member 6. The first fixing portion 25 is disposed on the outer side in the vehicle width direction relative to the second fixing portion 26.

The first fixing portion 25 includes a vertical portion 25B extending in a direction perpendicular to the installation portion 21 from a vehicle front end portion of the installation portion 21 to an upper end of the first cross member 5, and a first horizontal portion 25A extending horizontally from an end portion of the vertical portion 25B and is fixed to the upper end of the first cross member 5. The second fixing portion 26 includes a second horizontal portion 26A extending horizontally from a vehicle rear end portion of the installation portion 21 to a vehicle rear side. The first fixing portion 25 has a fastening hole 20F for fastening a bolt or the like (not shown) to the first cross member 5. The second horizontal portion 26A of the second fixing portion 26 has a fastening hole 20G for fastening a bolt or the like (not shown) to the second cross member 6. Herein, vertical and horizontal do not strictly mean directions with reference to the direction of gravity. The vertical is used in the upper-lower direction or a vertical direction and the horizontal is used in the front-rear direction, the left-right direction, or a horizontal direction.

The first inclined portion 23B and the second inclined portion 24B are formed with beads 23D, 23E and beads 24D, 24E, respectively. The beads 23D, 23E and the beads 24D, 24E extend in the vehicle width direction and are arranged in parallel in the vehicle front-rear direction. A pair of beads 23D, 23E are arranged in parallel in the vehicle front-rear direction on the first inclined portion 23B and a pair of beads 24D, 24E are arranged in parallel in the vehicle front-rear direction on the second inclined portion 24B.

In Figs. 4, 8, and 9, the recess 21D surrounds the opening 21A. The recess 21D includes a bulging portion 21F. The bulging portion 21F bulges into the second fixing portion 26.

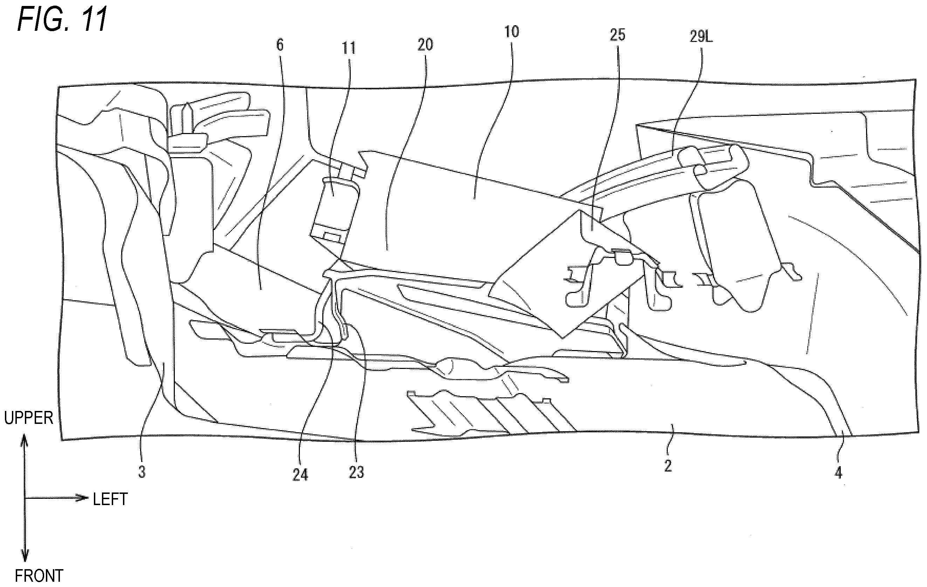

Next, a state of the electrical component support structure after side collision of the vehicle 1 will be described. When an external force F (see Fig. 1) due to side collision acts on the vehicle 1, as shown in Figs. 10 and 11, the side sill 4 is greatly deformed to enter an inner side of a vehicle interior.

By being pushed by the deformed side sill 4 or the like, a load acts on the bracket 20 and the bracket 20 is displaced toward a central side in the vehicle width direction. Due to this load, deformation occurs in the first leg portion 23 and the second leg portion 24 of the bracket 20 and the first leg portion 23 and the second leg portion 24 are bent and folded in the upper-lower direction. For this reason, the bracket 20 is displaced toward the central side in the vehicle width direction with a slight lift from the floor panel 2.

In the present embodiment described above, the bracket 20 includes the installation portion 21 in which the electrical component 10 is installed, and the first leg portion 23 and the second leg portion 24 serving as a pair of leg portions. The first leg portion 23 and the second leg portion 24 support the installation portion 21 to be separated from the floor panel 2 toward the upper side. The first leg portion 23 and the second leg portion 24 extend in parallel to each other toward the tunnel portion 3 from the end portions on the tunnel portion 3 side of the installation portion 21. The first leg portion 23 and the second leg portion 24 include the first fastening portion 23A and the second fastening portion 24A at the distal end portions. The first fastening portion 23A and the second fastening portion 24A are fastened to the floor panel 2.

The connector portion 11 is disposed between the first leg portion 23 and the second leg portion 24 serving as a pair of leg portions and between the tunnel portion 3 and the electrical component 10 in the plan view of the vehicle 1. The hole 2C passing through the floor panel 2 is provided in a position between the first fastening portion 23A and the second fastening portion 24A of the first leg portion 23 and the second leg portion 24 serving as a pair of leg portions. The harness 12 connected to the connector portion 11 passes through the hole 2C.

Since the hole 2C of the floor panel 2 is provided in a position between the first fastening portion 23A and the second fastening portion 24A where the leg portions of the bracket 20 are fastened, part of the load that acts on the hole 2C of the floor panel 2 in the vehicle front-rear direction can be received by the leg portions of the bracket 20, the floor panel 2 around the hole 2C can be prevented from being deformed, and the load can be prevented from directly transmitting to the harness 12.

The load that acts in the vehicle width direction can be prevented from directly transmitting to the harness 12 since the load can be alleviated by the installation portion 21 or the tunnel portion 3. Since part of the load that acts in the vehicle front-rear direction can be received by the leg portions of the bracket 20, the load that acts on the electrical component 10 supported by the bracket 20 can be reduced. As a result, the electrical component 10 and the harness 12 extending from the electrical component 10 can be protected at the time of side collision of the vehicle 1.

In addition, the connector portion 11 is disposed in a position where the connector portion 11 overlaps the hole 2C in the upper-lower direction. Accordingly, the efficiency of attaching the harness 12 drawn out from the hole 2C to the connector 12 can be improved.

In the present embodiment, a plurality of member portions including the first member portion 2A and the second member portion 2B extending in the vehicle front-rear direction below the floor panel 2 are provided between the side sill 4 and the tunnel portion 3. The first leg portion 23, the second leg portion 24 and the hole 2C are disposed between the first member portion 2A and the second member portion 2B in the vehicle width direction.

Since the first leg portion 23 and the second leg portion 24 serving as a pair of leg portions and the hole 2C are disposed between the first member portion 2A and the second member portion 2B, which extend in the vehicle front-rear direction, in the vehicle width direction, the load in the vehicle width direction can be received by the plurality of member portions and the first leg portion 23 and the second leg portion 24 can be prevented from being deformed.

Since the first member portion 2A and the second member portion 2B extend in the vehicle front-rear direction with the first leg portion 23 and the second leg portion 24 serving as a pair of leg portions and the hole 2C interposed therebetween, the first leg portion 23 and the second leg portion 24 serving as a pair of leg portions are less likely to receive impact due to the load in the vehicle front-rear direction and can be prevented from being deformed.

In the plan view of the vehicle according to the present embodiment, the center 2D of the hole 2C is closer to the installation portion 21 than the first virtual line VL1 passing through the first fastening portion 23A and the second fastening portion 24A of the first leg portion 23 and the second leg portion 24 serving as a pair of leg portions.

Accordingly, the hole 2C can be brought close to the connector portion 11 side in the plan view of the vehicle 1, the harness 12 connected to the connector portion 11 can be easily handled into the hole 2C, and the workability can be improved.

Further, the extending direction of the harness 12 can be set such that an inclination angle of the harness 12 from the connector portion 11 to the hole 2C is gentle. Accordingly, the harness 12 can be prevented from being subjected to a large tension.

In the present embodiment, the second virtual line VL 2 passing through the center 2D of the hole 2C in the vehicle width direction is set in the plan view of the vehicle 1. The installation portion 21 includes the cutout portion 27 which is an end portion on the tunnel portion 3 side between the first leg portion 23 and the second leg portion 24. The cutout portion 27 is recessed toward the side sill 4 in a position where the cutout portion 27 faces the base portion of the first leg portion 23 in the vehicle front-rear direction. The cutout portion 27 is formed over the base portion of the first leg portion 23 from the second virtual line VL 2 on the outer edge of the installation portion 21, and is disposed in a position where the connector portion 11 overlaps the cutout portion 27 in the upper-lower direction in the plan view of the vehicle 1.

Accordingly, even when the installation portion 21 of the bracket 20 moves toward the tunnel portion 3, a space through which the harness 12 passes through can be ensured, which is defined by the cutout portion 27 on the first leg portion 23 side of the harness 12. Accordingly, the harness 12 can be prevented from excessively interfering with the end portion on the tunnel portion 3 side of the installation portion 21 of the bracket 20.

In the present embodiment, the total length of the first leg portion 23 is larger than the total length of the second leg portion 24 by forming the cutout portion 27.

Accordingly, when the load acts from the outer side in the vehicle width direction and the installation portion 21 moves toward a central side of the vehicle, an end of the installation portion 21 is not immediately brought into contact with the harness 12 extending from the connector portion 11 due to the cutout portion 27. Accordingly, the end of the installation portion 21 can be prevented from coming into contact with and excessively interfering with the harness 12.

In the present embodiment, the hole 2C is circular and the edge of the hole 2C is smooth.

Accordingly, even when the harness 12 passing through the hole 2C is pulled to the left and right, the harness 12 can be prevented from being subject to excessive tension.

In the present embodiment, the plurality of member portions include the first member portion 2A adjacent to the tunnel portion 3 and the second member portion 2B formed in a position where the second member portion 2B overlaps the electrical component 10.

The reinforcing plate 7 fastened to the first member portion 2A and the second member portion 2B is provided on the upper surface of the floor panel 2. The first leg portion 23 and the second leg portion 24 serving as a pair of leg portions are fastened to the reinforcing plate 7. The hole 2C passes through the reinforcing plate 7.

Since the electrical component 10, the first member portion 2A, and the second member portion 2B overlap each other in the upper-lower direction, the electrical component 10 can be prevented from moving greatly toward the central side of the vehicle due to the impact from the outer side in the vehicle width direction.

Since the hole 2C, the first fastening portion 23A, and the second fastening portion 24A are provided on the reinforcing plate 7 sandwiched between the first member portion 2A and the second member portion 2B, rigidity can be improved and deformation of the hole 2C can be prevented.

In the present embodiment, the second member portion 2B is biased toward the hole 2C relative to the central portion of the electrical component 10 in the vehicle width direction.

Since the second member portion 2B is biased toward the hole 2C, the hole 2C, the first fastening portion 23A, and the second fastening portion 24A can sandwich a range surrounded by the first member portion 2A and the second member portion 2B, the peripheral surface rigidity of the hole 2C of the floor panel 2 can be improved, and the periphery of the hole 2C can be prevented from being curved due to external impact.

Although the embodiment of the present invention has been disclosed, it will be apparent to those skilled in the art that modifications may be made without departing from the scope of the present invention as defined in the following claims.

### Reference Signs List

- 1: vehicle
- 2: floor panel
- 2A: first member portion
- 2B: second member portion
- 2C: hole
- 2D: center
- 3: tunnel portion
- 4: side sill
- 7: reinforcing plate
- 10: electrical component
- 11: connector portion
- 12: harness
- 20: bracket
- 21: installation portion
- 23: first leg portion
- 23A: first fastening portion
- 24: second leg portion
- 24A: second fastening portion
- 27: cutout portion
- VL1: first virtual line
- VL2: second virtual line

## Claims

1. An electrical component support structure comprising:
a side sill (4) extending in a vehicle front-rear direction at an outer end portion of a floor panel (2) in a vehicle width direction;
a tunnel portion (3) extending in the vehicle front-rear direction at a central portion of the floor panel (2) in the vehicle width direction;
an electrical component (10) including a connector portion (11) to which a harness (12) is connected; and
a bracket (20) disposed between the side sill (4) and the tunnel portion (3) on an upper surface of the floor panel (2) and supporting the electrical component (10),
**characterized in that** the bracket (20) includes
an installation portion (21) to which the electrical component (10) is installed, and
a pair of leg portions (23, 24) supporting the installation portion (21) to be separated from the floor panel (2) toward an upper side, extending in parallel to each other from end portions of the installation portion (21) on a side of the tunnel portion (3) toward the tunnel portion (3), and each of the pair of leg portions (23, 24) including a fastening portion (23A, 24A) fastened to the floor panel (2),
wherein the connector portion (11) is disposed between the pair of leg portions (23, 24) and between the tunnel portion (3) and the electrical component (4) in a plan view of a vehicle,
wherein a hole (2C) penetrating the floor panel (2) is provided in a position between the fastening portions (23A, 24A) of the pair of leg portions (23, 24), and
wherein the harness (12) connected to the connector portion (11) passes through the hole (2C).

2. The electrical component support structure according to claim 1,
wherein a plurality of member portions (2A, 2B) are provided between the side sill (4) and the tunnel portion (3), the plurality of member portions (2A, 2B) extending in the vehicle front-rear direction below the floor panel (2), and
wherein the pair of leg portions (23, 24) and the hole (2C) are disposed between the plurality of member portions (2A, 2B) in the vehicle width direction.

3. The electrical component support structure according to claim 1 or 2,
wherein a center (2D) of the hole (2C) is closer to the installation portion (21) than a virtual line (VL1) passing through the fastening portions (23A, 24A) of the pair of leg portions (23, 24) in the plan view of the vehicle.

4. The electrical component support structure according to claim 3,
wherein the virtual line (VL1) is a first virtual line (VL1),
wherein a second virtual line (VL2) passing through the center (2D) of the hole (2C) in the vehicle width direction in the plan view of the vehicle is set,
wherein the pair of leg portions (23, 24) includes a first leg portion (23) and a second leg portion (24),
wherein the installation portion (21) includes a cutout portion (27) formed at an end portion of the installation portion (21) on a side of the tunnel portion (3) between the first leg portion (23) and the second leg portion (24),
wherein the cutout portion (27) is disposed in a position where the cutout portion (27) faces a base portion of the first leg portion (23) in the vehicle front-rear direction, and is recessed toward the side sill (4),
wherein the cutout portion (27) is formed over the base portion of the first leg portion (23) from the second virtual line (VL2) at an outer edge of the installation portion (21), and
wherein the connector portion (11) is disposed in a position where the connector portion (11) overlaps the cutout portion (27) in a vehicle upper-lower direction in the plan view of the vehicle.

5. The electrical component support structure according to claim 4,
wherein a total length of the first leg portion (23) is larger than a total length of the second leg portion (24) by forming the cutout portion (27).

6. The electrical component support structure according to any one of claims 1 to 5,
wherein the hole (2C) has a circular shape, and an edge of the hole (2C) is smoothly formed.

7. The electrical component support structure according to claim 2,
wherein the plurality of member portions (2A, 2B) include a first member portion (2A) adjacent to the tunnel portion (3), and a second member (2B) portion formed in a position where the second member portion (2B) overlaps the electrical component (10) in a vehicle upper-lower direction,
wherein a reinforcing plate (7) fastened to the first member portion (2A) and the second member portion (2B) is provided on the upper surface of the floor panel (2), and
wherein the pair of leg portions (23, 24) are fastened to the reinforcing plate (7), and the hole (2C) penetrates the reinforcing plate (7).

8. The electrical component support structure according to claim 7,
wherein the second member portion (2B) is biased toward the hole (2C) relative to a central portion of the electrical component (10) in the vehicle width direction.

## Patentansprüche

1. Trägerstruktur elektrischer Komponente, umfassend:
einen Seitenschweller (4), der sich in einer Vor-/Rückwärtsrichtung eines Fahrzeugs an einem äußeren Endabschnitt einer Bodenplatte (2) in einer Fahrzeugbreitenrichtung erstreckt;
einen Tunnelabschnitt (3), der sich in der Vor-/Rückwärtsrichtung eines Fahrzeugs an einem mittleren Abschnitt der Bodenplatte (2) in der Fahrzeugbreitenrichtung erstreckt;
eine elektrische Komponente (10), die einen Verbinderabschnitt (11) beinhaltet, mit dem ein Kabelbaum (12) verbunden ist; und
eine Halterung (20), die zwischen dem Seitenschweller (4) und dem Tunnelabschnitt (3) auf einer oberen Fläche der Bodenplatte (2) angeordnet ist und die elektrische Komponente (10) trägt,
**dadurch gekennzeichnet, dass** die Halterung (20) Folgendes beinhaltet einen Installationsabschnitt (21), an dem die elektrische Komponente (10) installiert wird, und
ein Paar von Schenkelabschnitten (23, 24), die den Installationsabschnitt (21) tragen, um von der Bodenplatte (2) zu einer Oberseite hin getrennt zu sein, die sich parallel zueinander von Endabschnitten des Installationsabschnitts (21) auf einer Seite des Tunnelabschnitts (3) zu dem Tunnelabschnitt (3) hin erstrecken, und wobei jeder von dem Paar von Schenkelabschnitten (23, 24) einen Befestigungsabschnitt (23A, 24A) beinhaltet, der an der Bodenplatte (2) befestigt ist,
wobei der Verbinderabschnitt (11) in der Draufsicht auf ein Fahrzeug zwischen dem Paar von Schenkelabschnitten (23, 24) und zwischen dem Tunnelabschnitt (3) und der elektrischen Komponente (4) angeordnet ist,
wobei ein Loch (2C), das die Bodenplatte (2) durchdringt, an einer Position zwischen den Befestigungsabschnitten (23A, 24A) des Paars von Schenkelabschnitten (23, 24) bereitgestellt ist, und
wobei der mit dem Verbinderabschnitt (11) verbundene Kabelbaum (12) durch das Loch (2C) verläuft.

2. Trägerstruktur elektrischer Komponente gemäß Anspruch 1,
wobei eine Vielzahl von Gliedabschnitten (2A, 2B) zwischen dem Seitenschweller (4) und dem Tunnelabschnitt (3) bereitgestellt ist, wobei sich die Vielzahl von Gliedabschnitten (2A, 2B) in der Vor-/Rückwärtsrichtung des Fahrzeugs unter der Bodenplatte (2) erstreckt, und
wobei das Paar von Schenkelabschnitten (23, 24) und das Loch (2C) zwischen der Vielzahl von Elementabschnitten (2A, 2B) in der Fahrzeugbreitenrichtung angeordnet sind.

3. Trägerstruktur elektrischer Komponente gemäß Anspruch 1 oder 2,
wobei eine Mitte (2D) des Lochs (2C) näher an dem Installationsabschnitt (21) ist als eine virtuelle Linie (VL1), die in der Draufsicht auf das Fahrzeug durch die Befestigungsabschnitte (23A, 24A) des Paars von Schenkelabschnitten (23, 24) verläuft.

4. Trägerstruktur elektrischer Komponente gemäß Anspruch 3, wobei die virtuelle Linie (VL1) eine erste virtuelle Linie (VL1) ist,
wobei eine zweite virtuelle Linie (VL2), die in der Draufsicht des Fahrzeugs durch die Mitte (2D) des Lochs (2C) in der Fahrzeugbreitenrichtung verläuft, festgelegt ist,
wobei das Paar von Schenkelabschnitten (23, 24) einen ersten Schenkelabschnitt (23) und einen zweiten Schenkelabschnitt (24) beinhaltet,
wobei der Installationsabschnitt (21) einen Ausschnittabschnitt (27) beinhaltet, der an einem Endabschnitt des Installationsabschnitts (21) auf einer Seite des Tunnelabschnitts (3) zwischen dem ersten Schenkelabschnitt (23) und dem zweiten Schenkelabschnitt (24) gebildet ist,
wobei der Ausschnittabschnitt (27) an einer Position angeordnet ist, in der der Ausschnittabschnitt (27) einem Basisabschnitt des ersten Schenkelabschnitts (23) in der Vor-/Rückwärtsrichtung des Fahrzeugs zugewandt ist, und in Richtung des Seitenschwellers (4) vertieft ist,
wobei der Ausschnittabschnitt (27) über dem Basisabschnitt des ersten Schenkelabschnitts (23) von der zweiten virtuellen Linie (VL2) an einem äußeren Rand des Installationsabschnitts (21) gebildet ist, und
wobei der Verbinderabschnitt (11) an einer Position angeordnet ist, an der der Verbinderabschnitt (11) in der Draufsicht des Fahrzeugs den Ausschnittabschnitt (27) in einer Auf-/Abrichtung des Fahrzeugs überlappt.

5. Trägerstruktur elektrischer Komponente gemäß Anspruch 4,
wobei eine Gesamtlänge des ersten Schenkelabschnitts (23) größer ist als eine Gesamtlänge des zweiten Schenkelabschnitts (24), indem der Ausschnittabschnitt (27) gebildet ist.

6. Trägerstruktur elektrischer Komponente gemäß einem der Ansprüche 1 bis 5, wobei das Loch (2C) eine kreisförmige Form aufweist und ein Rand des Lochs (2C) glatt gebildet ist.

7. Trägerstruktur elektrischer Komponenten gemäß Anspruch 2,
wobei die Vielzahl von Gliedabschnitten (2A, 2B) einen ersten Gliedabschnitt (2A) angrenzend an den Tunnelabschnitt (3) und einen zweiten Gliedabschnitt (2B), der in einer Position ausgebildet ist, in der der zweite Gliedabschnitt (2B) die elektrische Komponente (10) in einer Auf-/Abrichtung des Fahrzeugs überlappt, umfasst,
wobei eine Verstärkungsplatte (7), die an dem ersten Gliedabschnitt (2A) und dem zweiten Gliedabschnitt (2B) befestigt ist, auf der oberen Fläche der Bodenplatte (2) bereitgestellt ist, und
wobei das Paar von Schenkelabschnitten (23, 24) an der Verstärkungsplatte (7) befestigt ist und das Loch (2C) die Verstärkungsplatte (7) durchdringt.

8. Trägerstruktur elektrischer Komponente gemäß Anspruch 7,
wobei der zweite Gliedabschnitt (2B) in Richtung des Lochs (2C) in Bezug auf einen mittleren Abschnitt der elektrischen Komponente (10) in der Fahrzeugbreitenrichtung vorgespannt ist.

## Revendications

1. Une structure de support de composant électrique comprenant :
un seuil latéral (4) s'étendant dans une direction avant-arrière du véhicule au niveau d'une partie d'extrémité extérieure d'un panneau de plancher (2) dans une direction de la largeur du véhicule ;
une partie de tunnel (3) s'étendant dans la direction avant-arrière du véhicule au niveau d'une partie centrale du panneau de plancher (2) dans la direction de la largeur du véhicule ;
un composant électrique (10) comprenant une partie de connecteur (11) à laquelle un faisceau (12) est connecté ; et
un support (20) disposé entre le seuil latéral (4) et la partie de tunnel (3) sur une surface supérieure du panneau de plancher (2) et supportant le composant électrique (10),
**caractérisé en ce que** le support (20) comprend
une partie d'installation (21) à laquelle le composant électrique (10) est installé, et
une paire de parties de pattes (23, 24) supportant la partie d'installation (21) à séparer du panneau de plancher (2) vers un côté supérieur, s'étendant parallèlement l'une à l'autre depuis des parties d'extrémité de la partie d'installation (21) sur un côté de la partie de tunnel (3) vers la partie de tunnel (3), et chacune de la paire de parties de pattes (23, 24) comprenant une partie de fixation (23A, 24A) fixée au panneau de plancher (2),
dans laquelle la partie de connecteur (11) est disposée entre la paire de parties de pattes (23, 24) et entre la partie de tunnel (3) et le composant électrique (4) dans une vue en plan d'un véhicule,
dans laquelle un trou (2C) pénétrant le panneau de plancher (2) est prévu dans une position entre les parties de fixation (23A, 24A) de la paire de parties de pattes (23, 24), et
dans laquelle le faisceau (12) connecté à la partie de connecteur (11) passe à travers le trou (2C).

2. La structure de support de composant électrique selon la revendication 1,
dans laquelle une pluralité de parties d'élément (2A, 2B) sont prévues entre le seuil latéral (4) et la partie de tunnel (3), la pluralité de parties d'élément (2A, 2B) s'étendant dans la direction avant-arrière du véhicule sous le panneau de plancher (2), et
dans laquelle la paire de parties de pattes (23, 24) et le trou (2C) sont disposés entre la pluralité de parties d'élément (2A, 2B) dans la direction de la largeur du véhicule.

3. La structure de support de composant électrique selon la revendication 1 ou 2, dans laquelle un centre (2D) du trou (2C) est plus proche de la partie d'installation (21) qu'une ligne virtuelle (VL1) passant par les parties de fixation (23A, 24A) de la paire de parties de pattes (23, 24) dans la vue en plan du véhicule.

4. La structure de support de composant électrique selon la revendication 3,
dans laquelle la ligne virtuelle (VL1) est une première ligne virtuelle (VL1), dans laquelle une deuxième ligne virtuelle (VL2) passant par le centre (2D) du trou (2C) dans la direction de la largeur du véhicule dans la vue en plan du véhicule est établie,
dans laquelle la paire de parties de pattes (23, 24) comprend une première partie de patte (23) et une deuxième partie de patte (24),
dans laquelle la partie d'installation (21) comprend une partie découpée (27) formée au niveau d'une partie d'extrémité de la partie d'installation (21) sur un côté de la partie de tunnel (3) entre la première partie de patte (23) et la deuxième partie de patte (24),
dans laquelle la partie découpée (27) est disposée dans une position où la partie découpée (27) fait face à une partie de base de la première partie de patte (23) dans la direction avant-arrière du véhicule, et est en retrait vers le seuil latéral (4),
dans laquelle la partie découpée (27) est formée sur la partie de base de la première partie de patte (23) à partir de la deuxième ligne virtuelle (VL2) au niveau d'un bord extérieur de la partie d'installation (21), et
dans laquelle la partie de connecteur (11) est disposée dans une position où la partie de connecteur (11) chevauche la partie découpée (27) dans une direction supérieure-inférieure du véhicule dans la vue en plan du véhicule.

5. La structure de support de composant électrique selon la revendication 4, dans laquelle une longueur totale de la première partie de patte (23) est supérieure à une longueur totale de la deuxième partie de patte (24) en formant la partie découpée (27).

6. La structure de support de composant électrique selon l'une quelconque des revendications 1 à 5,
dans laquelle le trou (2C) a une forme circulaire, et un bord du trou (2C) est formé de manière lisse.

7. La structure de support de composant électrique selon la revendication 2,
dans laquelle la pluralité de parties d'élément (2A, 2B) comprend une première partie d'élément (2A) adjacente à la partie de tunnel (3), et une deuxième partie d'élément (2B) formée dans une position où la deuxième partie d'élément (2B) chevauche le composant électrique (10) dans une direction supérieure-inférieure du véhicule,
dans laquelle une plaque de renforcement (7) fixée à la première partie d'élément (2A) et à la deuxième partie d'élément (2B) est prévue sur la surface supérieure du panneau de plancher (2), et
dans laquelle la paire de parties de pattes (23, 24) est fixée à la plaque de renforcement (7), et le trou (2C) pénètre dans la plaque de renforcement (7).

8. La structure de support de composant électrique selon la revendication 7, dans laquelle la deuxième partie d'élément (2B) est sollicitée vers le trou (2C) par rapport à une partie centrale du composant électrique (10) dans la direction de la largeur du véhicule.
